# EUROPEAN PATENT APPLICATION

(11) **EP 4 718 296 A1**
(43) Date of publication of application: **01.04.2026**
(21) Application number: 25204616.4
(22) Date of filing: 25.09.2025
(51) Int. Cl.: G06F 21/44, H04L 9/32, H04L 9/40, H04W 12/069

(54) **METHOD FOR CREATING DIGITAL KEY, DEVICE, AND MEDIUM**

(30) Priority: 26.09.2024 CN 202411356845
(71) Applicant: Xiaomi EV Technology Co., Ltd., 100176 Beijing (CN)
(72) Inventor: YU, Fan, Beijing, 100176 (CN)
(74) Representative: Stöckeler, Ferdinand

(57) **Abstract**

A method for creating a digital key includes: receiving (S501) a terminal public key certificate sent by a target terminal, in which the terminal public key certificate is obtained by signing a terminal public key of the target terminal by using a fleet pairing private key in a fleet pairing public-private key pair associated with the target vehicle; performing (S502) a signature verification on the terminal public key certificate by using a fleet pairing public key in the fleet pairing public-private key pair; sending (S503) a vehicle public key certificate of the target vehicle to the target terminal in a case that the terminal public key is obtained after the signature verification is successful; and determining (S504) that a digital key corresponding to the target terminal for controlling the target vehicle is successfully created in response to receiving a successful signature verification notice sent by the target terminal.

## Description

### FIELD

The present invention relates to the field of communication processing technologies, and more particularly to a method for creating a digital key, a device, and a medium.

### BACKGROUND

In a digital key system based on a public-private key pair mechanism and a certificate system, it is assumed that a terminal device used by a vehicle owner (hereinafter referred to as a vehicle-owner device) and a vehicle each have a pair of public and private keys. The vehicle holds a public key of the vehicle-owner device (hereinafter referred to as a vehicle-owner device public key) through a certain pre-established method, and the vehicle-owner device also holds a vehicle public key through a certain pre-established method, so that it may be considered that the vehicle and the vehicle-owner device have completed mutual trust, that is, the vehicle-owner device may become a digital key of the vehicle. Therefore, a digital key creation process of the vehicle-owner device is also called a process of exchanging public keys between the vehicle-owner device and the vehicle.

In the related art, in a fleet management system, in order to be able to use a vehicle in a fleet, any vehicle user needs to execute a complete digital key creation process. During the execution of the digital key creation process, the vehicle user needs to input a vehicle pairing code on a central control screen of the vehicle (the vehicle pairing code is sent from a cloud to a terminal device used by the vehicle user (hereinafter referred to as a vehicle-user device)). Then, the vehicle verifies the vehicle pairing code, and enters a communication connection establishment mode after the verification is passed, so as to complete the mutual credit authorization between the vehicle and the vehicle-user device and create a vehicle-user digital key through the communication connection establishment mode.

However, this method requires that the vehicle user has entered the vehicle through other keys, which imposes a condition that the vehicle user needs to have other keys of the vehicle. However, the above restriction will lead to the complexity of the actual first-time vehicle use process for the vehicle user, resulting in low efficiency in vehicle delivery and poor vehicle use experience.

### SUMMARY

The present invention aims at solving one of the technical problems in the related art at least to some extent.

Therefore, the present invention provides a method and an apparatus for creating a digital key, a device and a medium, so that there is no constraint that a vehicle user needs to have other keys of a target vehicle, and thus the vehicle user may apply for the use of a fleet vehicle conveniently and flexibly, thereby improving the vehicle delivery efficiency of the vehicle user and enhancing the vehicle use experience of the vehicle user.

The present invention is defined in independent claims, and the preferable features according to the present invention are defined in the dependent claims. Any embodiment in the present disclosure that does not fall within the scope of the present invention should be regarded as an example for understanding the present invention.

Embodiments of a first aspect of the present invention provide a method for creating a digital key, which includes: receiving a terminal public key certificate sent by a target terminal, in which the terminal public key certificate is obtained by signing a terminal public key of the target terminal by using a fleet pairing private key in a fleet pairing public-private key pair associated with a target vehicle in a fleet; performing a signature verification on the terminal public key certificate by using a fleet pairing public key in the fleet pairing public-private key pair; sending a vehicle public key certificate of the target vehicle to the target terminal in a case that the terminal public key is obtained after the signature verification is successful; and determining that a digital key corresponding to the target terminal for controlling the target vehicle is successfully created in response to that the target terminal obtains a vehicle public key of the target vehicle.

Embodiments of a second aspect of the present invention provide a method for creating a digital key, which includes: sending a terminal public key certificate to a target vehicle in a fleet, in which the terminal public key certificate is obtained by signing a terminal public key of a target terminal by using a fleet pairing private key in a fleet pairing public-private key pair associated with the target vehicle; receiving a vehicle public key certificate sent by the target vehicle, in which the vehicle public key certificate is configured to be sent in a case that the target vehicle performs a signature verification on the terminal public key certificate by using a fleet pairing public key in the fleet pairing public-private key pair and obtains the terminal public key after the signature verification is successful; and performing a signature verification on the vehicle public key certificate, and obtaining a vehicle public key of the target vehicle after the signature verification is successful.

Embodiments of a third aspect of the present invention provide an apparatus for creating a digital key, which is applied to a target vehicle in a fleet, and includes: a receiving module configured to receive a terminal public key certificate sent by a target terminal, in which the terminal public key certificate is obtained by signing a terminal public key of the target terminal by using a fleet pairing private key in a fleet pairing public-private key pair associated with the target vehicle; a signature verification module configured to perform a signature verification on the terminal public key certificate by using a fleet pairing public key in the fleet pairing public-private key pair; a sending module configured to send a vehicle public key certificate of the target vehicle to the target terminal in a case that the terminal public key is obtained after the signature verification is successful; and a determining module configured to determine that a digital key corresponding to the target terminal for controlling the target vehicle is successfully created in response to receiving a successful signature verification notice sent by the target terminal.

Embodiments of a fourth aspect of the present invention provide an apparatus for creating a digital key, which is applied to a target terminal and includes: a sending module configured to send a terminal public key certificate to a target vehicle in a fleet, in which the terminal public key certificate is obtained by signing a terminal public key of the target terminal by using a fleet pairing private key in a fleet pairing public-private key pair associated with the target vehicle; a receiving module configured to receive a vehicle public key certificate sent by the target vehicle, wherein the vehicle public key certificate is sent in a case that the target vehicle performs a signature verification on the terminal public key certificate by using a fleet pairing public key in the fleet pairing public-private key pair, and the terminal public key is obtained after the signature verification is successful; and a signature verification module configured to perform a signature verification on the vehicle public key certificate. The sending module is further configured to send a successful signature verification notice to the target vehicle in a case that a vehicle public key of the target vehicle is obtained after the signature verification is successful.

Embodiments of a fifth aspect of the present invention propose an electronic device, which includes a memory, a processor and a computer program stored in the memory and executable by the processor. When the processor executes the program, the method for creating the digital key described in the first aspect or the method for creating the digital key described in the second aspect is realized.

Embodiments of a sixth aspect of the present invention propose a non-transitory computer-readable storage medium, on which a computer program is stored, and the computer program, when executed by a processor, realizes the method for creating the digital key as described in the first aspect, or realizes the method for creating the digital key as described in the second aspect.

Embodiments of a seventh aspect of the present invention propose a computer program product, on which a computer program is stored, which, when executed by a processor, realizes the method for creating the digital key as described in the first aspect, or realizes the method for creating the digital key as described in the second aspect.

In the method and the apparatus for creating the digital key, the device and the medium provided by the present invention, the fleet pairing public-private key pair is additionally maintained for each fleet vehicle to issue the terminal public key certificate of the target terminal of the vehicle user later, so that the vehicle user does not need to enter the target vehicle and input a vehicle pairing code of a pairing process on a central control screen of the target vehicle, and the target vehicle does not need to use a device pairing code of the pairing process to verify the vehicle pairing code so as to ensure the correctness of the pairing process. Thus, the vehicle user may apply for use of the fleet vehicle conveniently and flexibly, thus enhancing the vehicle delivery efficiency for the vehicle user and improving the vehicle use experience of the vehicle user. That is, in the present invention, an additional digital key certificate chain is added to the vehicle digital key certificate system (for example, in addition to the existing cloud public key certificate, vehicle public key certificate and vehicle-owner device public key certificate, the terminal public key certificate of the target terminal used by the vehicle user (or called the vehicle-user device public key certificate) and the fleet pairing public key certificate generated based on the fleet pairing public-private key pair are added), so that it may be compatible with the ability to identify a new digital key certificate system, thus addressing the constraint that the vehicle user needs to have other keys of the vehicle when using the vehicle for the first time and creating the digital key of the target terminal used by the vehicle user, in a use process of a digital key of a traditional fleet vehicle, improving the vehicle use experience of the vehicle user and the management convenience of the fleet vehicle.

Additional aspect and advantages of that present invention will be set forth in part in the following description, and in part will be apparent from the description which follows, or may be learned by practice of the present invention.

### BRIEF DESCRIPTION OF THE DRAWINGS

The above and/or additional aspects and advantages of the present invention will be apparent and easily understood from the following description of embodiments made with reference to the accompanying drawings.
Fig. 1 is a schematic diagram of an existing certificate structure.
Fig. 2 is a schematic diagram of an existing digital key public-private key pair system.
Fig. 3 is a schematic diagram of an existing digital key certificate chain.
Fig. 4 is a schematic diagram of an existing vehicle owner digital key creation process.
Fig. 5 is a flow chart of a first method for creating a digital key provided by an embodiment of the present invention.
Fig. 6 is a flow chart of a second method for creating a digital key provided by an embodiment of the present invention.
Fig. 7 is a flow chart of a third method for creating a digital key provided by an embodiment of the present invention.
Fig. 8 is a schematic diagram of a fleet vehicle registration process provided by an embodiment of the present invention.
Fig. 9 is a schematic diagram of a fleet vehicle deregistration process provided by an embodiment of the present invention.
Fig. 10 is a schematic diagram of a fleet vehicle deregistration process provided by an embodiment of the present invention.
Fig. 11 is a flow chart of a fourth method for creating a digital key provided by an embodiment of the present invention.
Fig. 12 is a flow chart of a fifth method for creating a digital key provided by an embodiment of the present invention.
Fig. 13 is a schematic diagram of an improved digital key public-private key pair system provided by an embodiment of the present invention.
Fig. 14 is a schematic diagram of an improved digital key certificate chain provided by an embodiment of the present invention.
Fig. 15 is a schematic diagram of a process for creating a digital key for a vehicle user provided by an embodiment of the present invention.
Fig. 16 is a schematic diagram of an apparatus for creating a digital key provided by an embodiment of the present invention.
Fig. 17 is a schematic diagram of another apparatus for creating a digital key provided by an embodiment of the present invention.
Fig. 18 is a block diagram of a target vehicle according to an illustrative embodiment.

### DETAILED DESCRIPTION

Hereinafter, embodiments of the present invention will be described in detail, examples of which are illustrated in the accompanying drawings, and the same or similar reference numerals indicate the same or similar elements or elements having the same or similar functions throughout. The embodiments described below by referring to the accompanying drawings are illustrative and are intended to explain the present invention, but not to be construed as limitations of the present invention.

Terminal (such as a mobile phone) digital keys based on Bluetooth, Near Field Communication (NFC) and Ultra-Wide Band (UWB) communication have become very popular in various models of major automobile companies. A user may unlock a vehicle directly through a terminal later by creating a vehicle-owner digital key on his/her own, which greatly improves the user's experience in using the vehicle.

As a common mode of vehicle operation, a fleet is common in a commercial operation mode of a taxi company, a trucking company and other companies, and it usually has the characteristics that a matching relationship between people and vehicles tends to change. With a digital key function that allows a user to create a vehicle-owner digital key on his/her own, the vehicle use experience of a relevant vehicle user may be improved.

Therefore, the design of a more easy-to-use fleet digital key management system based on the digital key function has also become a consideration for vehicle companies when designing the vehicle digital key function.

From the point of view of security, a public-private key pair is a common digital key security scheme, which guarantees the information security of both communication parties by realizing three basic conditions:
1. In a pair of public and private keys, the private key is stored at a certain terminal, and is not easily leaked, and the public key may be released to the public;
2. For the same pair of public and private keys, the content signed with the private key may be verified with the public key;
3. For communication party A and communication party B, communication party A holds its own pair of public and private keys and a public key of communication party B, and communication party B holds its own pair of public and private keys and a public key of communication party A.

After the above three preconditions are met, both communication parties may sign the communication content with their own private keys and then transfer the signed communication content. The opposite party may accept the received message content only when successfully completing the signature verification with the public key.

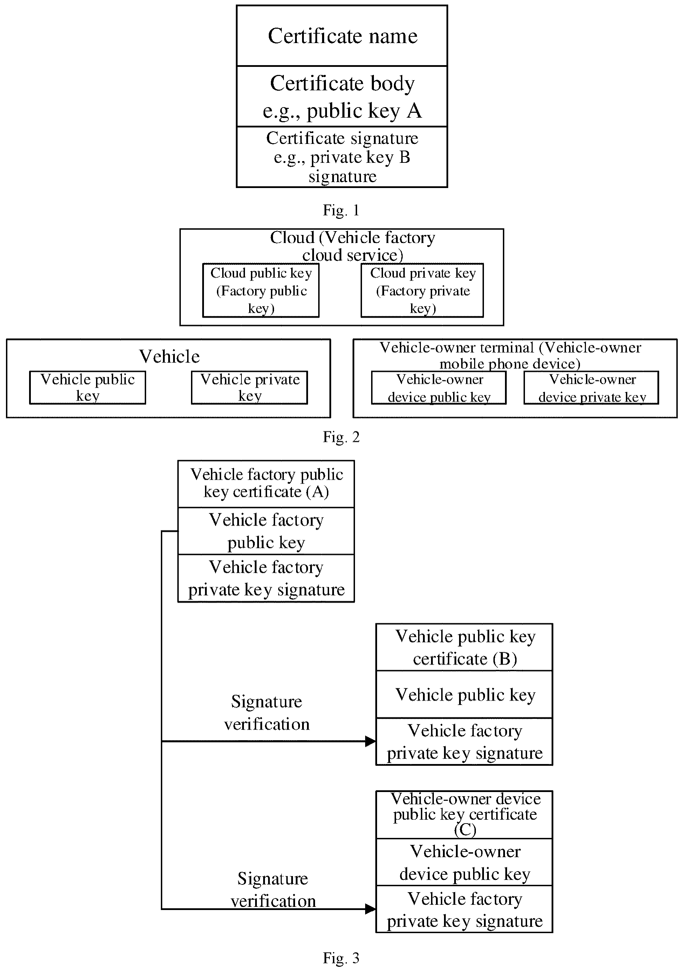

In order to enable the public keys to be transferred among various terminals, a certificate structure as shown in Fig. 1 is usually adopted. In Fig. 1, a certificate name is a name of a certificate; a certificate body is a main content that the certificate wants to encapsulate or transfer, for example, when public key A is transferred, public key A may be the certificate body; and a certificate signature is a complete signature of the certificate. Usually, a private key is used to sign the certificate, and a public key corresponding to the private key may verify the signature, so as to ensure that the opposite communication party may complete the secure credit authorization for the received certificate content.

Furthermore, in a digital key system based on a public-private key pair mechanism and a certificate system, it is assumed that a terminal device (hereinafter referred to as a vehicle-owner device) used by a vehicle owner (i.e., a vehicle user that expects to use the vehicle this time) and the vehicle each have a pair of public and private keys, the vehicle holds a public key of the vehicle-owner device through a certain pre-established method, and the vehicle-owner device also holds a vehicle public key through a certain pre-established method, so that it may be considered that the vehicle and the vehicle-owner device have completed mutual trust, that is, the vehicle-owner device may become a digital key of the vehicle. Therefore, a digital key creation process of the vehicle-owner device is also called a process of exchanging public keys between the vehicle-owner device and the vehicle.

Based on the above description, a public-private key pair system and a certificate chain for the digital key are introduced, as shown in Fig. 2 and Fig. 3. In Fig. 2, it is marked that each terminal in the public-private key pair system for the digital key holds its own pair of public and private keys in an initial state.

In Fig. 3, a certificate style of the certificate generated by each public key in Fig. 2 is described in detail, which also includes a signature verification relationship among the certificates, that is, a public key in an upper-level certificate may verify a signature of a lower-level certificate, so that the system may recognize a public key in the lower-level certificate, and this public key may verify a signature of a further lower-level certificate, and so on, so that a single system recognizes the public keys within the certificates of various levels received within the system, after completing a series of signature verifications, through a root certificate and a series of sub-certificates.

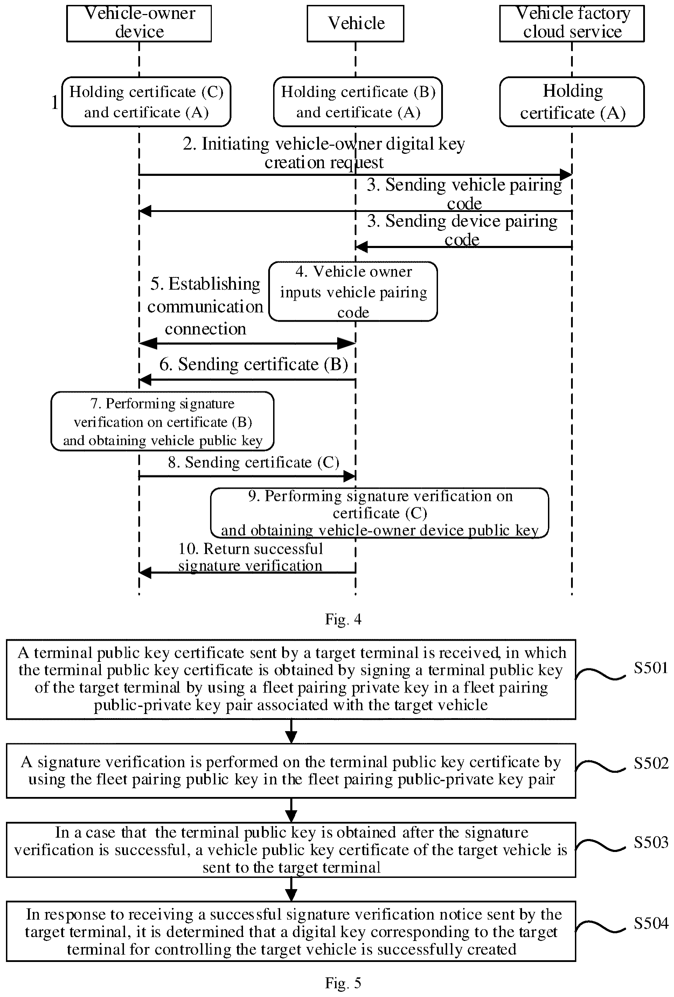

According to the above preconditions, the current common process of creating the vehicle-owner digital key is shown in Fig. 4, and mainly includes the following steps.
1. Before the creation of the vehicle-owner digital key, a cloud obtains a cloud public key certificate by self-signing a cloud public key. For example, when the cloud is a vehicle factory cloud service with a vehicle management function, the cloud public key may be a vehicle factory public key, and the cloud public key certificate may be a vehicle factory public key certificate (A).
   Through a vehicle-cloud communication link defined by the vehicle factory itself or a data filling capacity of a production line built by the vehicle factory itself, the vehicle obtains the vehicle factory public key certificate (A) and a vehicle public key certificate (B). Through a communication link between the vehicle factory and a vehicle factory application installed in a vehicle-owner device, the vehicle-owner device obtains the vehicle factory public key certificate (A) and a vehicle-owner device public key certificate.
2. When the vehicle owner desires to use the vehicle-owner device to complete the creation of the digital key, he/she initiates a vehicle-owner digital key creation request to the cloud (i.e., the vehicle factory cloud service).
3. The cloud (that is, the vehicle factory cloud service) responds to the vehicle-owner digital key creation request, returns a vehicle pairing code to the vehicle-owner device, and sends a device pairing code to a corresponding vehicle.
4. The vehicle owner inputs the vehicle pairing code received by the vehicle-owner device on the central control screen of the vehicle.
5. Based on the received device pairing code, the vehicle verifies the vehicle pairing code to confirm the correctness of the pairing process, and then enters a communication connection establishment mode to establish a secure communication connection with the vehicle-owner device through NFC, Bluetooth or UWB.
6. The vehicle sends the vehicle public key certificate (B) to the vehicle-owner device through the above communication connection.
7. The vehicle-owner device verifies the signature of the vehicle public key certificate (B) through the cloud public key (such as the vehicle factory public key), and after the signature verification is correct, the vehicle public key may be obtained.
8. The vehicle-owner device sends the vehicle-owner device public key certificate (C) to the vehicle.
9. The vehicle verifies the signature of the vehicle-owner device public key certificate (C) through the cloud public key (such as the vehicle factory public key), and the vehicle-owner device public key may be obtained after the signature verification is correct;
10. The vehicle returns a successful signature verification notice to the vehicle-owner device.

After the above process, the vehicle and the vehicle-owner device may exchange public keys with each other to obtain each other's public keys, complete mutual credit authorization, and communicate securely thereafter, that is, the vehicle-owner digital key is successfully created.

In the fleet management system, the vehicle user this time may subsequently use the vehicle-owner digital key of his/her own terminal device to complete the use of the vehicle, that is, the vehicle user enters a vehicle use state.

In the above scheme, in order to be able to use the vehicle in the fleet, the vehicle user needs to implement a complete process of creating the vehicle-owner digital key, and in step 4 of the process of creating the vehicle-owner digital key, the vehicle user needs to input the vehicle pairing code received by the vehicle-owner device on the central control screen of the vehicle. This process requires that the vehicle user has already entered the vehicle through other keys at this time, which restricts the condition that the vehicle user needs to have other keys of the vehicle. However, the above restriction will lead to the complexity of the actual first-time vehicle use process for the vehicle user, resulting in low efficiency in vehicle delivery and poor vehicle use experience.

In view of the above technical problems, the present invention mainly proposes a method and apparatus for creating a digital key, a device, and a medium.

Hereinafter, the method and apparatus for creating the digital key, the device, and the medium of the embodiments of the present invention will be described with reference to the accompanying drawings.

Fig. 5 is a flow chart of a first method for creating a digital key provided by an embodiment of the present invention.

The method for creating the digital key according to the embodiments of the present invention may be performed by a target vehicle, and the target vehicle may be any vehicle in a fleet.

As shown in Fig. 5, the method for creating the digital key may include the following steps S501 to S504.

In step S501, a terminal public key certificate sent by a target terminal is received. The terminal public key certificate is obtained by signing a terminal public key of the target terminal by using a fleet pairing private key in a fleet pairing public-private key pair associated with the target vehicle.

The target terminal may be a terminal device used by any vehicle user who wants to use the target vehicle, including but not limited to smart phones, tablet computers, personal digital assistants, wearable devices and other hardware devices with various operating systems, touch screens and/or display screens.

The fleet pairing public-private key pair includes a fleet pairing public key and the fleet pairing private key, and the fleet pairing public-private key pair is a public-private key pair generated or created by a cloud for the target vehicle when the target vehicle performs a fleet vehicle registration action.

The terminal public key is a public key in a public-private key pair generated by the target terminal.

The terminal public key certificate (or referred to as a vehicle-user device public key certificate) may be obtained by, in response to a digital key creation request sent by the target terminal, signing by the cloud the terminal public key of the target terminal carried in the digital key creation request by using the fleet pairing private key in the fleet pairing public-private key pair associated with the target vehicle.

The terminal public key certificate includes a certificate name, a certificate body and a certificate signature, the certificate name is a name of the terminal public key certificate, the certificate body contains the terminal public key of the target terminal, and the certificate signature is a complete signature of the terminal public key certificate. For example, the terminal public key is signed by using the fleet pairing private key to obtain the complete certificate signature.

In the embodiments of the present invention, when the target terminal approaches the target vehicle, the target terminal may establish a communication link with the target vehicle through communication modes such as NFC, Bluetooth, UWB, etc., and send the terminal public key certificate to the target vehicle based on the communication link, and accordingly, the target vehicle may receive the terminal public key certificate sent by the target terminal.

In step S502, a signature verification is performed on the terminal public key certificate by using the fleet pairing public key in the fleet pairing public-private key pair.

The signature verification is a process of verifying the validity of a digital signature to ensure the integrity of data and the authenticity of a source of the data.

In the embodiments of the present invention, the target vehicle may use the fleet pairing public key in the fleet pairing public-private key pair to verify the signature of the terminal public key certificate.

In step S503, in a case that the terminal public key is obtained after the signature verification is successful, a vehicle public key certificate of the target vehicle is sent to the target terminal.

The vehicle public key certificate includes a certificate name, a certificate body and a certificate signature. The certificate name is a name of the vehicle public key certificate, the certificate body contains a vehicle public key of the target vehicle, and the certificate signature is a complete signature of the vehicle public key certificate.

In the embodiments of the present invention, under the condition that the signature verification is successful or the signature verification is correct, the target vehicle may obtain the trusted terminal public key from the certificate body of the terminal public key certificate, and at this time, the target vehicle may further send the vehicle public key certificate of the target vehicle to the target terminal.

In step S504, in response to receiving a successful signature verification notice sent by the target terminal, it is determined that a digital key corresponding to the target terminal for controlling the target vehicle is successfully created.

In any embodiment of the present invention, the successful signature verification notice may be sent when the target terminal obtains the vehicle public key of the target vehicle in response to the successful signature verification of the vehicle public key certificate.

The vehicle public key is a public key in a public-private key pair generated by the target vehicle.

In the embodiments of the present invention, when receiving the vehicle public key certificate sent by the target vehicle, the target terminal may perform the signature verification on the vehicle public key certificate, and obtain the trusted vehicle public key from the certificate body of the vehicle public key certificate and send the successful signature verification notice to the target vehicle when the signature verification is successful or the signature verification is correct.

Accordingly, when the target vehicle receives the successful signature verification notice, it may be determined that both the target vehicle and the target terminal hold each other's public keys, that is, the digital key of the target terminal is successfully created.

According to the method for creating the digital key in the embodiments of the present invention, the fleet pairing public-private key pair is additionally maintained for each fleet vehicle to issue the terminal public key certificate of the target terminal of the vehicle user later, so that the vehicle user does not need to enter the target vehicle and input a vehicle pairing code of a pairing process on a central control screen of the target vehicle, and the target vehicle does not need to use a device pairing code of the pairing process to verify the vehicle pairing code so as to ensure the correctness of the pairing process. Thus, the vehicle user may apply for use of the fleet vehicle conveniently and flexibly, thus enhancing the vehicle delivery efficiency for the vehicle user and improving the vehicle use experience of the vehicle user. That is, in the present invention, an additional digital key certificate chain is added to the vehicle digital key certificate system (for example, in addition to the existing cloud public key certificate, vehicle public key certificate and vehicle-owner device public key certificate, the terminal public key certificate of the target terminal used by the vehicle user (or called the vehicle-user device public key certificate) and the fleet pairing public key certificate generated based on the fleet pairing public-private key pair are added, and relevant certificates are issued to the target terminal and the target vehicle), so that it may be compatible with the ability to identify a new digital key certificate system, thus addressing the constraint that the vehicle user needs to have other keys of the vehicle when using the vehicle for the first time and creating the digital key of the target terminal used by the vehicle user, in a use process of a digital key of a traditional fleet vehicle, improving the vehicle use experience of the vehicle user and the management convenience of the fleet vehicle.

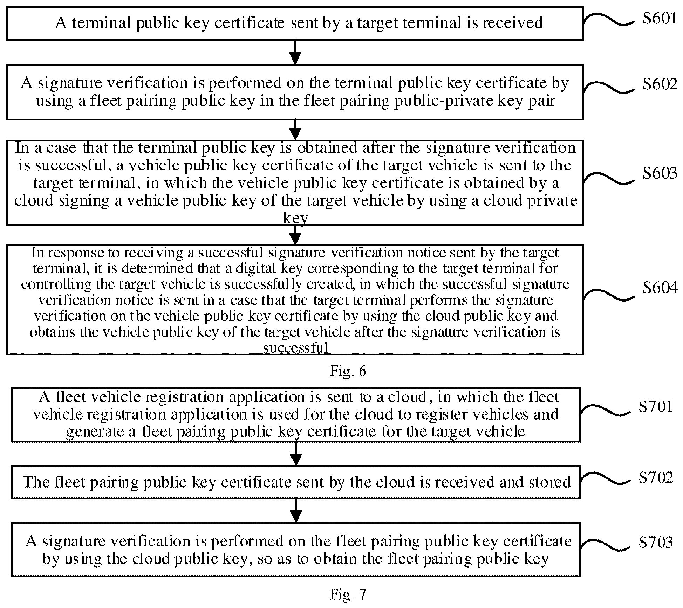

An embodiment of the present invention provides another method for creating a digital key, and Fig. 6 is a flow chart of a second method for creating a digital key provided by an embodiment of the present invention. The method for creating the digital key may be performed by a target vehicle.

It should be noted that the method for creating the digital key may be executed alone, or may also be executed together with any embodiment or possible implementation in the embodiments of the present invention, or may also be executed together with any technical scheme in the related art, which is not limited in the embodiments of the present invention.

As shown in Fig. 6, the method for creating the digital key may include the following steps S601 to S604.

In step S601, a terminal public key certificate sent by a target terminal is received.

The terminal public key certificate is obtained by signing a terminal public key of the target terminal by using a fleet pairing private key in a fleet pairing public-private key pair associated with the target vehicle.

In step S602, a signature verification is performed on the terminal public key certificate by using a fleet pairing public key in the fleet pairing public-private key pair.

For the explanation of steps S601 to S602, reference may be made to the relevant description in any embodiment of the present invention, which will not be repeated here.

In step S603, in a case that the terminal public key is obtained after the signature verification is successful, a vehicle public key certificate of the target vehicle is sent to the target terminal, in which the vehicle public key certificate is obtained by a cloud signing a vehicle public key of the target vehicle by using a cloud private key.

The cloud private key is a private key in a public-private key pair generated by the cloud.

The cloud has the function of managing vehicles. For example, the cloud may be a vehicle factory cloud service. At this time, the cloud private key may also be called a vehicle factory private key generated by the vehicle factory cloud service. Accordingly, a public key in the public-private key pair generated by the cloud is recorded as a cloud public key in the present invention, and may also be called a vehicle factory public key generated by the vehicle factory cloud service.

In the embodiments of the present invention, under the condition that the signature verification is successful or the signature verification is correct, the target vehicle may obtain the trusted terminal public key from a certificate body of the terminal public key certificate, and at this time, the target vehicle may further send the vehicle public key certificate of the target vehicle to the target terminal.

The vehicle public key certificate is obtained by the cloud using the cloud private key to sign the vehicle public key of the target vehicle. For example, the target vehicle may send the vehicle public key to the cloud through a vehicle-cloud communication link defined by the vehicle factory itself, and the cloud may sign the vehicle public key by using the cloud private key, to obtain the vehicle public key certificate. Then, the cloud may allow the target vehicle to obtain the vehicle public key certificate through the vehicle-cloud communication link defined by the vehicle factory itself or a data filling capacity of a production line built by the vehicle factory itself.

In step S604, in response to receiving a successful signature verification notice sent by the target terminal, it is determined that a digital key corresponding to the target terminal for controlling the target vehicle is successfully created. The successful signature verification notice is sent in a case that the target terminal performs the signature verification on the vehicle public key certificate by using the cloud public key and obtains the vehicle public key of the target vehicle after the signature verification is successful.

In the embodiments of the present invention, when receiving the vehicle public key certificate sent by the target vehicle, the target terminal may use the cloud public key to perform the signature verification on the vehicle public key certificate, and obtain the trusted vehicle public key from a certificate body of the vehicle public key certificate and send the successful signature verification notice to the target vehicle when the signature verification is successful or the signature verification is correct. Accordingly, when the target vehicle receives the successful signature verification notice, it may be determined that both the target vehicle and the target terminal hold each other's public keys, that is, the digital key of the target terminal is successfully created.

In any embodiment of the present invention, the target vehicle may use the following steps A to C to obtain the cloud public key.

In step A, the target vehicle receives a cloud public key certificate sent by the cloud, in which the cloud public key certificate is obtained by the cloud using the cloud private key to self-sign the cloud public key.

In step B, the target vehicle performs the signature verification on the cloud public key certificate.

As an example, the target vehicle may obtain and trust a certificate fingerprint of the cloud or the cloud public key in advance, and perform the signature verification on the cloud public key certificate based on the certificate fingerprint of the cloud or the cloud public key.

In step C, in a case that the signature verification is successful, the target vehicle may extract the cloud public key from a certificate body of the cloud public key certificate.

The method for creating the digital key in the embodiments of the present invention may, through the cloud with the vehicle management function, use the cloud private key to sign the vehicle public key of the target vehicle, so that the target vehicle may effectively obtain the vehicle public key certificate.

An embodiment of the present invention provides another method for creating a digital key, and Fig. 7 is a flow chart of a third method for creating a digital key provided by an embodiment of the present invention. The method for creating the digital key may be performed by a target vehicle.

It should be noted that the method for creating the digital key may be executed alone, or may also be executed together with any embodiment or possible implementation in the embodiments in the present invention, or may also be executed together with any technical scheme in the related art, which is not limited in the embodiments of the present invention.

As shown in Fig. 7, on the basis of any of the above embodiments, the target vehicle may obtain a fleet pairing public key through the following steps S701 to S703.

In step S701, a fleet vehicle registration application is sent to a cloud, in which the fleet vehicle registration application is used for the cloud to register vehicles and generate a fleet pairing public key certificate for the target vehicle.

It should be noted that the above embodiments all require the target vehicle to be a vehicle that has completed a fleet vehicle registration action, and thus it is necessary to introduce a fleet vehicle registration process, that is, the target vehicle needs to perform the fleet vehicle registration process.

In the present invention, the target vehicle may send the fleet vehicle registration application to the cloud. Accordingly, when the cloud receives the fleet vehicle registration application, it may respond to the fleet vehicle registration application, register the vehicles based on registration application information carried in the fleet vehicle registration application, and generate the fleet pairing public key certificate for the target vehicle.

As a possible implementation, the cloud may perform the following steps A' to D' when receiving the fleet vehicle registration application.

In step A', the cloud may respond to the fleet vehicle registration application and verify the registration application information carried in the fleet vehicle registration application.

The registration application information includes a vehicle number, a vehicle model, a vehicle color and other information of the target vehicle.

For example, a fleet manager may manually verify the registration application information through the cloud background, that is, it is manually authorized whether the target vehicle may join the fleet through the fleet manager.

In step B', in a case that the verification is passed, the cloud registers the registration application information, and creates a fleet pairing public-private key pair for the target vehicle.

In step C', the cloud may use the cloud private key to sign the fleet pairing public key in the fleet pairing public-private key pair associated with the target vehicle, to obtain the fleet pairing public key certificate.

In step D', the cloud may send the fleet pairing public key certificate to the target vehicle.

Therefore, the fleet pairing public key certificate may be effectively generated for the target vehicle through the fleet vehicle registration process.

In step S702, the fleet pairing public key certificate sent by the cloud is received and stored.

In the embodiments of the present invention, the target vehicle may receive the fleet pairing public key certificate sent by the cloud in response to the fleet vehicle registration application, and locally store the fleet pairing public key certificate.

In step S703, a signature verification is performed on the fleet pairing public key certificate by using the cloud public key, so as to obtain the fleet pairing public key.

It should be noted that the explanation of the cloud public key in the above embodiments is also applicable to this embodiment, and will not be repeated here.

In the embodiments of the present invention, the target vehicle may use the cloud public key to perform the signature verification on the fleet pairing public key certificate, and extract the fleet pairing public key from the certificate body of the fleet pairing public key certificate in a case that the signature verification is successful or the signature verification is correct.

The method for creating the digital key in the embodiments of the present invention may allow the target vehicle to effectively obtain the fleet pairing public key in the fleet pairing public-private key pair through the fleet vehicle registration process.

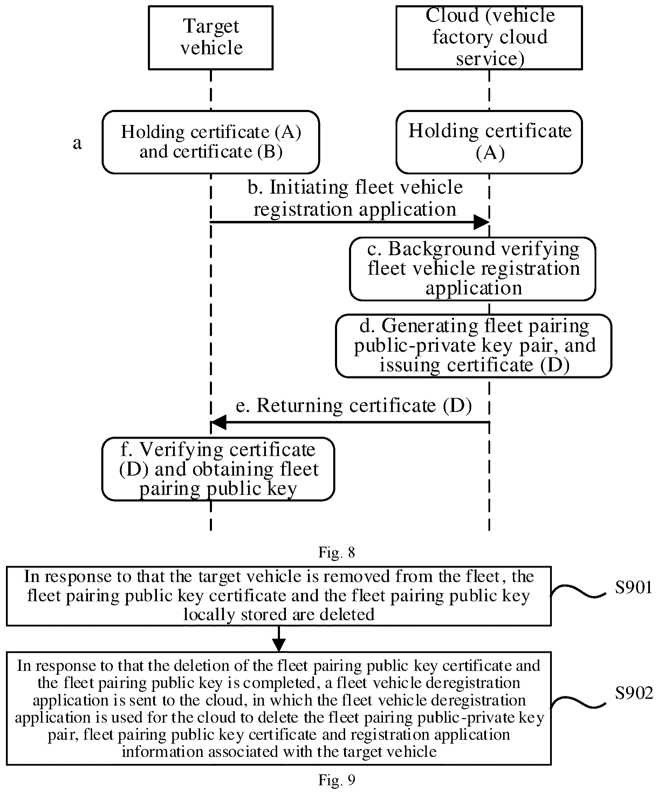

In the above embodiments, the target vehicle is required to be the vehicle that has completed the fleet vehicle registration, and thus it is necessary to introduce the fleet vehicle registration process. For example, the fleet vehicle registration process may be shown in Fig. 8, which mainly includes the following steps.

In step a, before the target vehicle in the fleet is registered, the cloud (or called the vehicle factory cloud service) obtains the cloud public key certificate by self-signing the cloud public key (or called the vehicle factory public key). For example, when the cloud is the vehicle factory cloud service with the vehicle management function, the cloud public key may be the vehicle factory public key, and the cloud public key certificate may be a vehicle factory public key certificate (A).

Through the vehicle-cloud communication link defined by the vehicle factory itself or the data filling capability of the production line built by the vehicle factory itself, the target vehicle obtains the certificate (A) and a vehicle public key certificate (B).

In step b, the fleet manager initiates the fleet vehicle registration application to the cloud by operating the central control screen of the target vehicle.

In step c, the fleet manager verifies the registration application information in the fleet vehicle registration application through the cloud background.

In step d, after the cloud background verifies that the registration application information is correct, the fleet pairing public-private key pair is generated for the target vehicle, and the fleet pairing public key in the fleet pairing public-private key pair is signed by using the cloud private key (or the vehicle factory private key), to obtain a fleet pairing public key certificate (D).

In step e, the cloud sends the fleet pairing public key certificate (D) to the target vehicle.

In step f, the target vehicle receives the fleet pairing public key certificate (D), and performs the signature verification on the fleet pairing public key certificate (D) through the cloud public key (or the vehicle factory public key), to obtain the fleet pairing public key.

At this point, the target vehicle has obtained the fleet pairing public key that may be used to perform the signature verification on the terminal public key certificate (or called the vehicle-user device public key certificate, marked as a certificate E) later, which may be considered that the target vehicle has completed the fleet vehicle registration process.

In any embodiment of the present invention, when the target vehicle is no longer used as the fleet vehicle, the target vehicle may perform a corresponding fleet vehicle deregistration process, which will be described in detail with reference to Fig. 9.

Fig. 9 is a schematic diagram of a fleet vehicle deregistration process provided by an embodiment of the present invention.

As shown in Fig. 9, the fleet vehicle deregistration process may include the following steps S901 to S902.

In step S901, in response to that the target vehicle is removed from the fleet, the fleet pairing public key certificate and the fleet pairing public key locally stored are deleted.

In the embodiments of the present invention, when the target vehicle is removed from the fleet, the target vehicle may delete the fleet pairing public key certificate and the fleet pairing public key locally stored.

In step S902, in response to that the deletion of the fleet pairing public key certificate and the fleet pairing public key is completed, a fleet vehicle deregistration application is sent to the cloud, in which the fleet vehicle deregistration application is used for the cloud to delete the fleet pairing public-private key pair, fleet pairing public key certificate and registration application information associated with the target vehicle.

In the embodiments of the present invention, when the deletion of the fleet pairing public key certificate and the fleet pairing public key is completed, the target vehicle may send the fleet vehicle deregistration application to the cloud, and accordingly, when the cloud receives the fleet vehicle deregistration application, it may delete the fleet pairing public-private key pair, the fleet pairing public key certificate and the registration application information associated with the target vehicle.

The method for creating the digital key in the embodiments of the present invention may remove the fleet pairing public key certificate and the fleet pairing public key stored locally in the target vehicle in a case that the target vehicle is no longer used as the fleet vehicle, so that the target vehicle no longer has the ability to perform the signature verification on the terminal public key certificate and falls back to the existing digital key certificate chain originally possessed by the target vehicle.

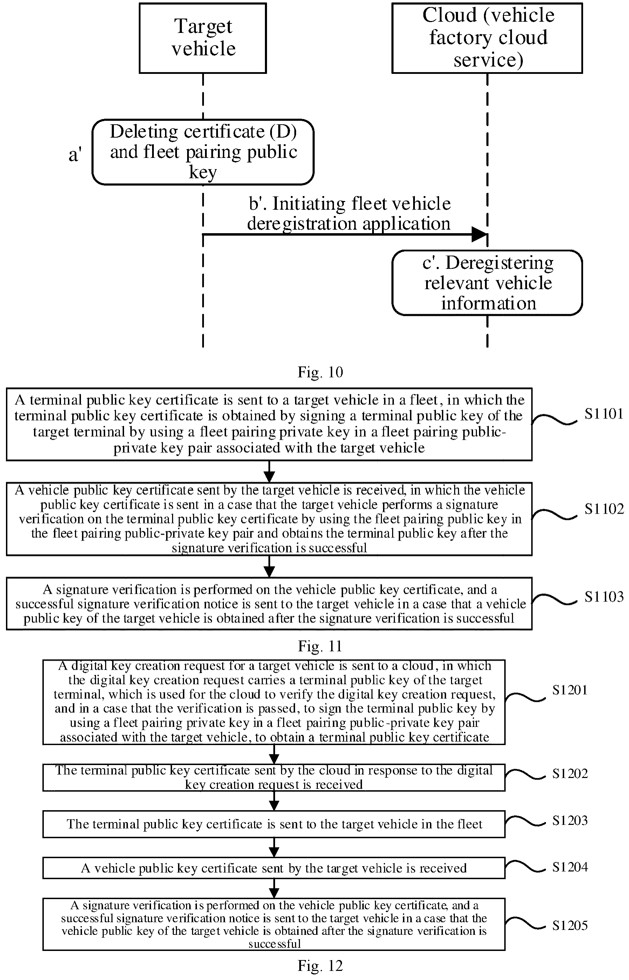

To sum up, when the target vehicle is no longer used as the fleet vehicle, the corresponding fleet vehicle deregistration process may be implemented. For example, the fleet vehicle deregistration process may be shown in Fig. 10, which mainly includes the following steps.

In step a', the fleet manager initiates the fleet vehicle deregistration process by operating the central control screen of the target vehicle, and the target vehicle first deletes the fleet pairing public key certificate (D) and the corresponding fleet pairing public key locally.

In step b', after completing the deletion action, the target vehicle initiates the fleet vehicle deregistration application to the cloud.

In step c', after receiving the fleet vehicle deregistration application, the cloud deregisters relevant vehicle information (including the fleet pairing public-private key pair, fleet pairing public key certificate and registration application information associated with the target vehicle).

At this point, the target vehicle removes the fleet pairing public key certificate (D), and no longer has the ability to perform the signature verification on the terminal public key certificate (or called the vehicle-user device public key certificate, that is, the certificate E), and falls back to the digital key certificate chain originally possessed by the target vehicle.

The above method embodiments are performed by the target vehicle, and the present invention also provides a method for creating a digital key performed by the target terminal.

Fig. 11 is a flow chart of a fourth method for creating a digital key provided by an embodiment of the present invention. The method for creating the digital key may be performed by the target terminal.

As shown in Fig. 11, the method for creating the digital key may include the following steps S1101 to S1103.

In step S1101, a terminal public key certificate is sent to a target vehicle in a fleet, in which the terminal public key certificate is obtained by signing a terminal public key of the target terminal by using a fleet pairing private key in a fleet pairing public-private key pair associated with the target vehicle.

In step S1102, a vehicle public key certificate sent by the target vehicle is received, in which the vehicle public key certificate is sent in a case that the target vehicle performs a signature verification on the terminal public key certificate by using the fleet pairing public key in the fleet pairing public-private key pair and obtains the terminal public key after the signature verification is successful.

In step S1103, a signature verification is performed on the vehicle public key certificate, and a successful signature verification notice is sent to the target vehicle in a case that a vehicle public key of the target vehicle is obtained after the signature verification is successful.

In any embodiment of the present invention, the successful signature verification notification is used to notice that the digital key for controlling the target vehicle and corresponding the target terminal is successfully created.

As a possible implementation, the vehicle public key certificate is obtained by a cloud using a cloud private key to sign the vehicle public key, and a method of the signature the verification of the vehicle public key certificate may be as follows: the target terminal uses a cloud public key to perform the signature verification on the vehicle public key certificate.

As a possible implementation, the cloud public key is obtained by the target terminal through the following steps: the target terminal receives a cloud public key certificate sent by the cloud, in which the cloud public key certificate is obtained by using the cloud private key to self-sign the cloud public key; the target terminal performs a signature verification on the cloud public key certificate, and extracts the cloud public key from a certificate body of the cloud public key certificate in a case that the signature verification is successful. For the implementation principle, reference may be made to the relevant description in step S604 in the above embodiments, which will not be repeated here.

It should be noted that the explanations of the methods performed by the target vehicle in the above embodiments are also applicable to the method performed by the target terminal in this embodiment, and their implementation principles are similar, which will not be repeated here.

According to the method for creating the digital key in embodiments of the present invention, an additional digital key certificate chain is added to the vehicle digital key certificate system (for example, in addition to the existing cloud public key certificate, vehicle public key certificate and vehicle-owner device public key certificate, the terminal public key certificate of the target terminal used by the vehicle user (or called the vehicle-user device public key certificate) and the fleet pairing public key certificate generated based on the fleet pairing public-private key pair are added, and relevant certificates are issued to the target terminal and the target vehicle), so that it may be compatible with the ability to identify a new digital key certificate system, thus addressing the constraint that the vehicle user needs to have other keys of the vehicle when using the vehicle for the first time and creating the digital key of the target terminal used by the vehicle user, in a use process of a digital key of a traditional fleet vehicle, improving the vehicle use experience of the vehicle user and the management convenience of the fleet vehicle.

An embodiment of the present invention provides another method for creating a digital key, and Fig. 12 is a flow chart of a fifth method for creating a digital key provided by an embodiment of the present invention. The method for creating the digital key may be performed by a target terminal.

It should be noted that the method for creating the digital key may be executed alone, or may also be executed together with any embodiment or possible implementation in the embodiments in the present invention, or may also be executed together with any technical scheme in the related art, which is not limited in the embodiments of the present invention.

As shown in Fig. 12, the method for creating the digital key may include the following steps S1201 to S1205.

In step S1201, a digital key creation request for a target vehicle is sent to a cloud, in which the digital key creation request carries a terminal public key of the target terminal, which is used for the cloud to verify the digital key creation request, and in a case that the verification is passed, to sign the terminal public key by using a fleet pairing private key in a fleet pairing public-private key pair associated with the target vehicle, to obtain a terminal public key certificate.

In the embodiments of the present invention, the target terminal may send the digital key creation request for the target vehicle to the cloud, and accordingly, when the cloud receives the digital key creation request, it may verify request parameters in the digital key creation request.

The request parameters include but are not limited to: account information of the target terminal; vehicle information of the target vehicle (such as a vehicle number, a vehicle model, a vehicle color, etc.); application information (such as application reasons) of the target terminal for applying for the digital key; business information associated with the target terminal in a business scenario to which the fleet belongs (such as a business department and position of the vehicle user).

As an example, a cloud background manager may verify the request parameters in the digital key creation request, that is, authorize the digital key to the vehicle user manually.

In the present application, in a case that the verification of the request parameters is passed, the cloud may sign the terminal public key of the target terminal by using the fleet pairing private key in the fleet pairing public-private key pair associated with the target vehicle, to obtain the terminal public key certificate of the target terminal.

In step S 1202, the terminal public key certificate sent by the cloud in response to the digital key creation request is received.

In the embodiments of the present invention, the target terminal may receive the terminal public key certificate sent by the cloud in response to the digital key creation request.

In step S1203, the terminal public key certificate is sent to the target vehicle in the fleet.

In step S1204, a vehicle public key certificate sent by the target vehicle is received.

The vehicle public key certificate is sent when the target vehicle uses a fleet pairing public key in the fleet pairing public-private key pair to perform a signature verification on the terminal public key certificate and obtains the terminal public key of the target terminal after the signature verification is successful.

In step S1205, a signature verification is performed on the vehicle public key certificate, and a successful signature verification notice is sent to the target vehicle in a case that the vehicle public key of the target vehicle is obtained after the signature verification is successful.

In any embodiment of the present invention, the successful signature verification notice is used to notice that the digital key corresponding to the target terminal for controlling the target vehicle is successfully created.

For the explanation of steps S1203 to S1205, reference may be made to the relevant description in any embodiment of the present invention, which will not be repeated here.

The method for creating the digital key in the embodiments of the present invention may, through the cloud with the vehicle management function, sign the terminal public key of the target terminal by using the fleet pairing private key in the fleet pairing public-private key pair generated for the target vehicle, so that the target terminal may effectively obtain the terminal public key certificate.

In any embodiment of the present invention, an additional certificate chain is added to the traditional digital key certificate system and a fleet vehicle registration process is designed on the cloud (such as the vehicle factory cloud service) to issue the relevant necessary certificates of the vehicle, thus addressing the problem that the vehicle delivery efficiency of the vehicle user is low and the vehicle use experience of the vehicle user is poor, due to the constraint that the vehicle user needs to have other keys of the vehicle, in the currently common process of the fleet vehicle user creating the digital key, thus improving the vehicle use experience of the vehicle user.

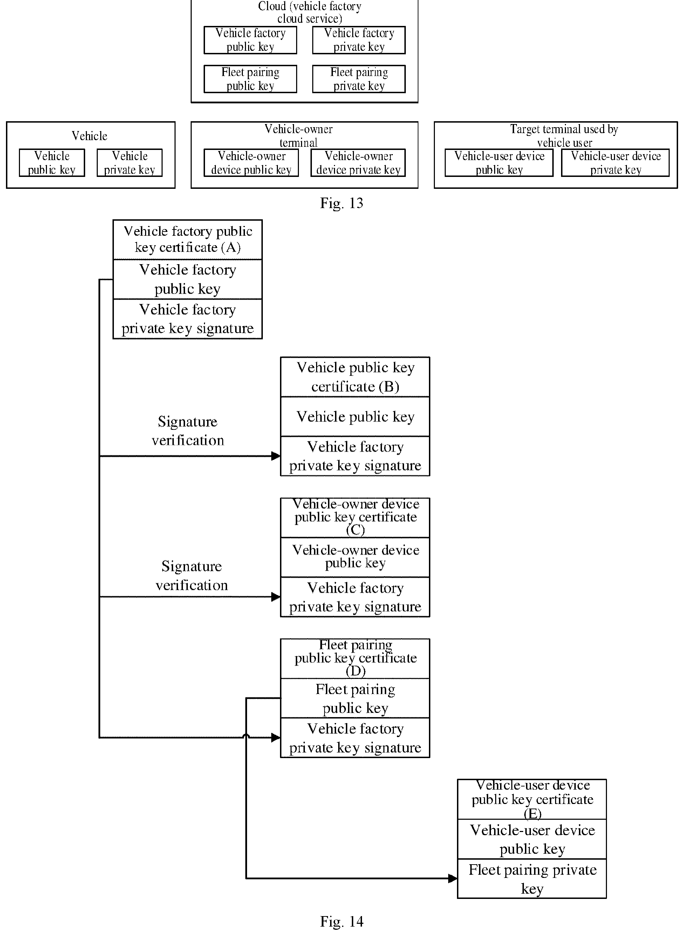

As an example, the improved digital key public-private key pair system may be shown in Fig. 13, and the improved digital key certificate chain may be shown in Fig. 14.

As shown in Fig. 13, compared with Fig. 2, the improved digital key public-private key pair system may maintain an additional fleet pairing public-private key pair for each registered fleet vehicle on the cloud (that is, the vehicle factory cloud service) side, so as to issue the terminal public key certificate (hereinafter collectively referred to as the vehicle-user device public key certificate (E)) later.

As shown in Fig. 14, in the improved digital key certificate chain, compared with Fig. 3, on one hand, a fleet pairing public key certificate (D) is newly introduced in Fig. 14, and the certificate body of the fleet pairing public key certificate (D) contains the fleet pairing public key, which is generated by the cloud (the vehicle factory cloud service) using the cloud private key (called the vehicle factory private key in Fig. 14) for signing, one for each vehicle; on the other hand, the vehicle-user device public key certificate (E) is newly introduced in Fig. 14, and the certificate body of the vehicle-user device public key certificate (E) contains the vehicle-user device public key (that is, the terminal public key of the target terminal), which is generated by the cloud (the vehicle factory cloud service) using the fleet pairing private key for signing.

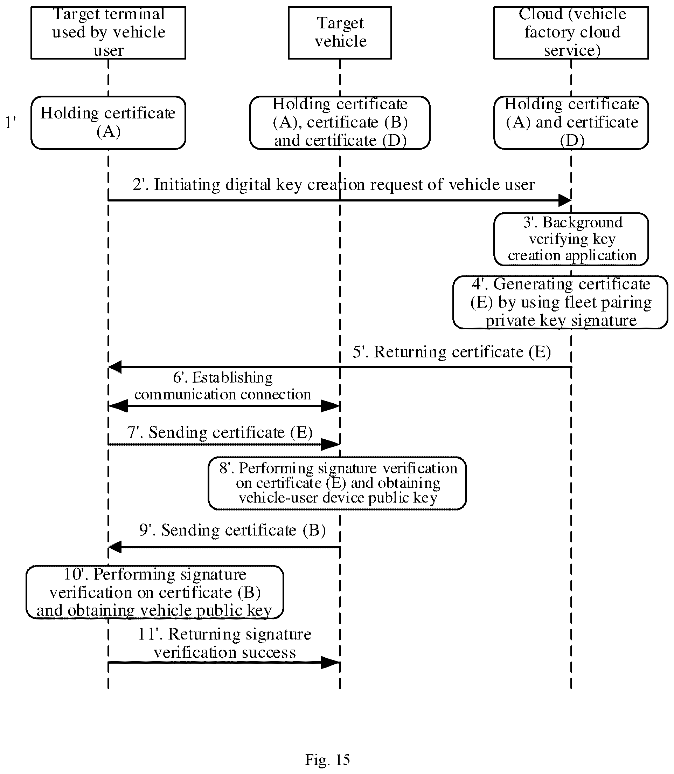

Further, the improved process of creating the digital key for the vehicle user may be shown in Fig. 15, which mainly includes the following steps.

In step 1', before the creation of the digital key for the vehicle user, the cloud (the vehicle factory cloud service) self-signs the cloud public key (or the vehicle factory public key) by using the cloud private key, and obtains the cloud public key certificate (marked as the vehicle factory public key certificate (A) in Fig. 14), and through the fleet vehicle registration process, the cloud private key is used to sign the fleet pairing public key used by the target vehicle, to obtain the fleet pairing public key certificate (D); by performing the fleet vehicle registration action on the target vehicle, the target vehicle obtains the vehicle factory public key certificate (A), the vehicle public key certificate (B) and the fleet pairing public key certificate (D); and through the communication link between the vehicle factory and the vehicle factory APP installed on the target terminal used by the vehicle user, the target terminal of the vehicle user obtains the vehicle factory public key certificate (A).

In step 2', when the vehicle user desires to use the target terminal to complete the creation of the digital key, the digital key creation request of the vehicle user is initiated to the cloud, and the terminal public key of the target terminal of the vehicle user (marked as the vehicle user device public key in Fig. 14) is carried together in the request.

In step 3', the cloud background manager verifies the digital key creation request through the cloud background.

In step 4', after verifying the digital key creation request, the vehicle-user device public key is signed by using the fleet pairing private key, to obtain the vehicle-user device public key certificate (E).

In step 5', the cloud returns the vehicle-user device public key certificate (E) to the target terminal of the vehicle user.

In step 6', when the vehicle user approaches the target vehicle while holding the target terminal, the target terminal establishes a communication link with the target vehicle through NFC, Bluetooth, UWB and other communication modes.

In step 7', the target terminal of the vehicle user sends the vehicle user device public key certificate (E) to the target vehicle.

In step 8', the target vehicle uses the fleet pairing public key to perform the signature verification on the vehicle-user device public key certificate (E) to obtain the trusted vehicle-user device public key.

In step 9', the target vehicle sends the vehicle public key certificate (B) to the target terminal of the vehicle user.

In step 10', the target terminal of the vehicle user uses the cloud public key to perform the signature verification on the vehicle public key certificate (B) to obtain the trusted vehicle public key.

In step 11', the target terminal of the vehicle user sends the successful signature verification notice to the target vehicle. At this point, both the target terminal of the vehicle user and the target vehicle hold each other's public keys, that is, the digital key of the target terminal of the vehicle user is successfully created.

Through the above method, the fleet may conveniently add a new certificate chain system to the target vehicle when the target vehicle is used as the fleet vehicle. Through the newly added certificate chain system, the target vehicle may change the credit authorization logic of digital key creation from "a person who enters the vehicle with a physical key may create a digital key" to "a person who is approved or authorized by the background may create a digital key", so that when the subsequent vehicle user creates a digital key of the vehicle user device, he/she is no longer subjected to the constraint that the vehicle user needs to have other keys of the target vehicle, and may apply for the use of the fleet vehicle conveniently and flexibly. When the target vehicle is no longer used as the fleet vehicle, the fleet pairing public key certificate (D) and its subsequent certificate chain may be removed conveniently, and the original vehicle digital key certificate chain and certificate system will not be affected.

To sum up, compared with the existing schemes, the scheme provided by the present invention has at least the following advantages: by introducing the fleet vehicle registration process for the fleet vehicle, the fleet pairing public key certificate may be issued for the fleet vehicle, so that an additional certificate chain is added to the fleet vehicle while the fleet vehicle still maintains its original digital key certificate system, and thus it is compatible with the ability to identify a new digital key certificate system, thus addressing the constraint that the vehicle user needs to have other keys of the fleet vehicle when using the vehicle for the first time and creating the digital key of the vehicle user device, in a use process of a digital key of a traditional fleet vehicle, improving the vehicle use experience of the vehicle user and the management convenience of the fleet vehicle.

Corresponding to the methods provided in the above embodiments of Figs. 5 to 10, the present invention also provides an apparatus for creating a digital key. Since the apparatus for creating the digital key provided in the embodiments of the present invention corresponds to the methods provided in the above embodiments of Figs. 5 to 10, the implementations of the above methods are also applicable to the apparatus for creating the digital key provided in the embodiments of the present invention, and will not be described in detail in the embodiments of the present invention.

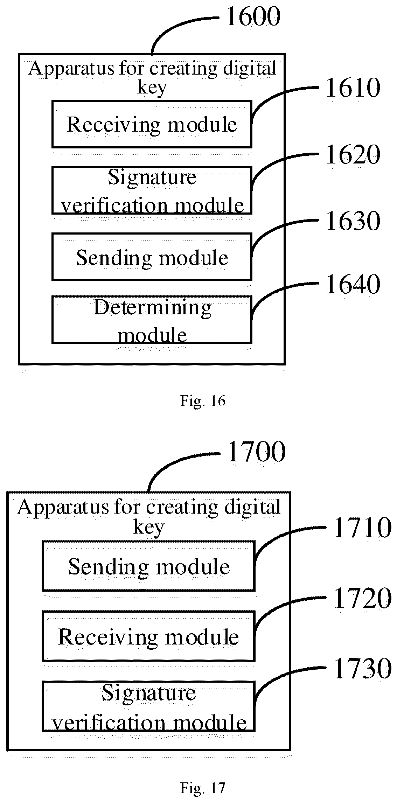

Fig. 16 is a schematic diagram of an apparatus 1600 for creating a digital key provided by an embodiment of the present invention.

As shown in Fig. 16, the apparatus 1600 for creating the digital key may be applied to a target vehicle in a fleet, and includes a receiving module 1610, a signature verification module 1620, a sending module 1630 and a determining module 1640.

The receiving module 1610 is configured to receive a terminal public key certificate sent by a target terminal. The terminal public key certificate is obtained by signing a terminal public key of the target terminal by using a fleet pairing private key in a fleet pairing public-private key pair associated with the target vehicle.

The signature verification module 1620 is configured to perform a signature verification on the terminal public key certificate by using a fleet pairing public key in the fleet pairing public-private key pair.

The sending module 1630 is configured to send a vehicle public key certificate of the target vehicle to the target terminal in a case that the terminal public key is obtained after the signature verification is successful.

The determining module 1640 is configured to determine that a digital key corresponding to the target terminal for controlling the target vehicle is successfully created in response to receiving a successful signature verification notice sent by the target terminal.

In any embodiment of the present invention, the successful signature verification notice is sent when the vehicle public key of the target vehicle is obtained in response to the successful signature verification of the vehicle public key certificate.

Further, in an implementation of the embodiments of the present invention, the fleet pairing public key is obtained by the target vehicle by using the following module:
a first processing module configured to send a fleet vehicle registration application to a cloud, in which the fleet vehicle registration application is configured for the cloud to register vehicles, and generate a fleet pairing public key certificate for the target vehicle; receive and store the fleet pairing public key certificate sent by the cloud; and perform a signature verification on the fleet pairing public key certificate by using a cloud public key, to obtain the fleet pairing public key.

In an implementation of the embodiments of the present invention, the fleet vehicle registration application is used for: verifying registration application information carried in the fleet vehicle registration application; in a case that the verification is passed, registering the registration application information, and creating a fleet pairing public-private key pair for the target vehicle; signing the fleet pairing public key in the fleet pairing public-private key pair by using a cloud private key, to obtain the fleet pairing public key certificate; and sending the fleet pairing public key certificate to the target vehicle.

In an implementation of the embodiments of the present invention, the vehicle public key certificate is obtained by the cloud using the cloud private key to sign the vehicle public key; and the successful signature verification notice is sent to the target vehicle in a case that the target terminal performs a signature verification on the vehicle public key certificate by using the cloud public key, and obtains the vehicle public key after the signature verification is successful.

In an implementation of the embodiments of the present invention, the cloud public key is obtained by the target vehicle by using the following module:
a second processing module configured to receive a cloud public key certificate sent by the cloud, in which the cloud public key certificate is obtained by self-signing the cloud public key by using the cloud private key; performing a signature verification on the cloud public key certificate; and in a case that the signature verification is successful, extracting the cloud public key from a certificate body of the cloud public key certificate.

In an implementation of the embodiments of the present invention, the apparatus 1600 for creating the digital key further includes:
a deleting module configured to delete the fleet pairing public key certificate and the fleet pairing public key locally stored, in response to removing the target vehicle from the fleet.

The sending module 1630 is further configured to send a fleet vehicle deregistration application to the cloud in response to that the deletion of the fleet pairing public key certificate and the fleet pairing public key is completed, in which the fleet vehicle deregistration application is used for the cloud to delete the fleet pairing public-private key pair, fleet pairing public key certificate and registration application information associated with the target vehicle.

In the apparatus for creating the digital key of embodiments of the present invention, an additional digital key certificate chain is added to the vehicle digital key certificate system (for example, in addition to the existing cloud public key certificate, vehicle public key certificate and vehicle-owner device public key certificate, the terminal public key certificate of the target terminal used by the vehicle user (or called the vehicle-user device public key certificate) and the fleet pairing public key certificate generated based on the fleet pairing public-private key pair are added, and relevant certificates are issued to the target terminal and the target vehicle), so that it may be compatible with the ability to identify a new digital key certificate system, thus addressing the constraint that the vehicle user needs to have other keys of the vehicle when using the vehicle for the first time and creating the digital key of the target terminal used by the vehicle user, in a use process of a digital key of a traditional fleet vehicle, improving the vehicle use experience of the vehicle user and the management convenience of the fleet vehicle.

Corresponding to the methods provided in the above embodiments of Figs. 11 to 15, the present invention also provides an apparatus for creating a digital key. Since the apparatus for creating the digital key provided in the embodiments of the present invention corresponds to the methods provided in the above embodiments of Figs. 11 to 15, the implementations of the above methods are also applicable to the apparatus for creating the digital key provided in the embodiments of the present invention, and will not be described in detail in the embodiments of the present invention.

Fig. 17 is a schematic diagram of another apparatus 1700 for creating a digital key provided by an embodiment of the present invention.

As shown in Fig. 17, the apparatus 1700 for creating the digital key may be applied to a target terminal, and include a sending module 1710, a receiving module 1720 and a signature verification module 1730.

The sending module 1710 is configured to send a terminal public key certificate to a target vehicle in a fleet. The terminal public key certificate is obtained by signing a terminal public key of the target terminal by using a fleet pairing private key in a fleet pairing public-private key pair associated with the target vehicle.

The receiving module 1720 is configured to receive a vehicle public key certificate sent by the target vehicle. The vehicle public key certificate is sent in a case that the target vehicle performs a signature verification on the terminal public key certificate by using a fleet pairing public key in the fleet pairing public-private key pair, and the terminal public key is obtained after the signature verification is successful.

The signature verification module 1730 is configured to perform a signature verification on the vehicle public key certificate.

The sending module 1710 is further configured to send a successful signature verification notice to the target vehicle in a case that a vehicle public key of the target vehicle is obtained after the signature verification is successful.

In any embodiment of the present invention, the successful signature verification notice is used to notice that the digital key corresponding to the target terminal for controlling the target vehicle is successfully created.

In an implementation of the embodiments of the present invention, the sending module 1710 is further configured to send a digital key creation request for the target vehicle to a cloud. The digital key creation request carries the terminal public key, which is used for the cloud to verify the digital key creation request, and in a case that the verification is passed, the terminal public key is signed by using the fleet pairing private key, to obtain the terminal public key certificate.

The receiving module 1720 is further configured to receive the terminal public key certificate sent by the cloud in response to the digital key creation request.

In an implementation of the embodiments of the present invention, the digital key creation request carries at least one of the following information: account information of the target terminal; vehicle information of the target vehicle; application information of the target terminal for applying for the digital key; and business information associated with the target terminal in a business scenario to which the fleet belongs.

In an implementation of the embodiments of the present invention, the vehicle public key certificate is obtained by the cloud using a cloud private key to sign the vehicle public key; and the signature verification module 1730 is configured to perform a signature verification on the vehicle public key certificate by using a cloud public key.

In an implementation of the embodiments of the present invention, the cloud public key is obtained by the target terminal by using the following module:
a processing module configured to receive a cloud public key certificate sent by the cloud, in which the cloud public key certificate is obtained by self-signing the cloud public key by using the cloud private key; perform a signature verification on the cloud public key certificate; in a case that the signature verification is successful, extract the cloud public key from a certificate body of the cloud public key certificate.

In the apparatus for creating the digital key of embodiments of the present invention, an additional digital key certificate chain is added to the vehicle digital key certificate system (for example, in addition to the existing cloud public key certificate, vehicle public key certificate and vehicle-owner device public key certificate, the terminal public key certificate of the target terminal used by the vehicle user (or called the vehicle-user device public key certificate) and the fleet pairing public key certificate generated based on the fleet pairing public-private key pair are added, and relevant certificates are issued to the target terminal and the target vehicle), so that it may be compatible with the ability to identify a new digital key certificate system, thus addressing the constraint that the vehicle user needs to have other keys of the vehicle when using the vehicle for the first time and creating the digital key of the target terminal used by the vehicle user, in a use process of a digital key of a traditional fleet vehicle, improving the vehicle use experience of the vehicle user and the management convenience of the fleet vehicle.

In order to realize the above embodiments, the present invention also proposes an electronic device, which includes a memory, a processor and a computer program stored in the memory and executable on the processor, and when the processor executes the computer program, the method for creating the digital key described in any of the above embodiments is realized.

In order to realize the above embodiments, the present invention also proposes a non-transitory computer-readable storage medium, on which a computer program is stored, which, when executed by a processor, realizes the method for creating the digital key as described in any of the above embodiments.

In order to realize the above embodiments, the present invention also proposes a computer program product, on which a computer program is stored, which, when executed by a processor, realizes the method for creating the digital key as described in any of the above embodiments.

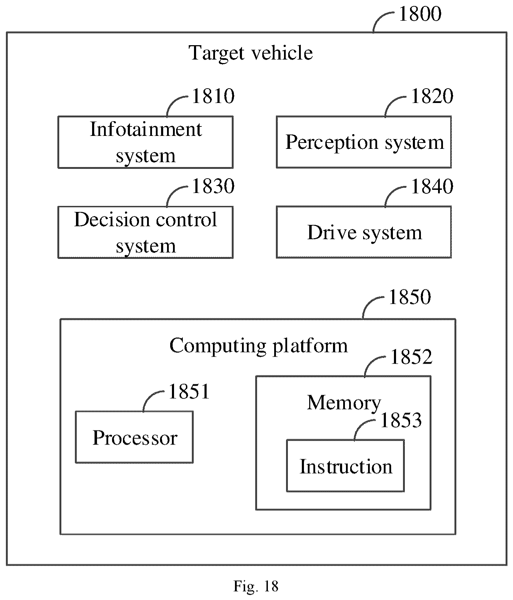

Fig. 18 is a block diagram of a target vehicle 1800 according to an illustrative embodiment. For example, the target vehicle 1800 may be a hybrid vehicle, a non-hybrid vehicle, an electric vehicle, a fuel cell vehicle or other types of vehicles. The target vehicle 1800 may be an autonomous vehicle, a semi-autonomous vehicle or a non-autonomous vehicle.

Referring to Fig. 18, the target vehicle 1800 may include various subsystems, such as an infotainment system 1810, a perception system 1820, a decision control system 1830, a drive system 1840, and a computing platform 1850. The target vehicle 1800 may also include more or less subsystems, and each subsystem may include a plurality of components. In addition, each subsystem and each component of the target vehicle 1800 may be interconnected in a wired or wireless manner.

In some embodiments, the infotainment system 1810 may include a communication system, an entertainment system, a navigation system and the like.

The sensing system 1820 may include several sensors for sensing information of the environment around the target vehicle 1800. For example, the sensing system 1820 may include a global positioning system (the global positioning system may be a GPS system, a Beidou system or other positioning systems), an inertial measurement unit (IMU), a lidar, a millimeter-wave radar, an ultrasonic radar and a camera.

The decision control system 1830 may include a computing system, a vehicle controller, a steering system, an accelerator and a braking system.

The drive system 1840 may include components that provide power for the target vehicle 1800 to move. In an embodiment, the drive system 1840 may include an engine, an energy source, a transmission system and wheels. The engine may be one or a combination of an internal combustion engine, an electric motor and an air compression engine. The engine may convert the energy provided by the energy source into mechanical energy.

Some or all functions of the target vehicle 1800 are controlled by the computing platform 1850. The computing platform 1850 may include at least one processor 1851 and a memory 1852, and the processor 1851 may execute instructions 1853 stored in the memory 1852.

The processor 1851 may be any conventional processor, such as a commercially available CPU. The processor may also include, for example, a graphic process unit (GPU), a field programmable gate array (FPGA), a system on chip (SOC), an application specific integrated circuit (ASIC) or a combination thereof.

The memory 1852 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 1853, the memory 1852 may also store data, such as road maps, route information, vehicle position, direction, speed and other data. The data stored in the memory 1852 may be used by the computing platform 1850.

In the embodiments of the present invention, the processor 1851 may execute the instructions 1853 to complete all or part of the steps of the above method embodiments.

In the description of the specification, explanations referring to the terms "one embodiment", "some embodiments", "an example", "a specific example" or "some examples" mean that specific features, structures, materials or characteristics described in connection with the embodiment or example are included in at least one embodiment or example of the present invention. In the specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art may combine different embodiments or examples and features of different embodiments or examples described in the specification without contradicting each other.

In addition, the terms "first" and "second" are only used for descriptive purposes, and cannot be understood as indicating or implying relative importance or implicitly indicating the number of indicated technical features. Therefore, the features defined by "first" and "second" may explicitly or implicitly include at least one such feature. In the description of the present invention, "a plurality of" means at least two, such as two, three, etc., unless otherwise specifically defined.

Any process or method described in a flow chart or described herein in other ways may be understood to include one or more modules, segments or portions of codes of executable instructions for achieving specific logical functions or steps in the process, and the scope of a preferred embodiment of the present invention includes other implementations, in which functions may be performed out of the order shown or discussed, for example, in a substantially simultaneous manner or in a reverse order according to the functions involved, which should be understood by those skilled in the technical field to which the embodiments of the present invention belong.

The logic and/or steps represented in the flow chart or described in other ways herein, for example, may be regarded as a sequenced list of executable instructions for realizing logical functions, and may be embodied in any computer-readable medium for use by or in combination with an instruction execution system, apparatus or device (such as a computer-based system, a system including a processor or other systems that may fetch instructions from the instruction execution system, apparatus or device and execute the instructions). In terms of this specification, a "computer-readable medium" may be any apparatus that can contain, store, communicate, propagate or transmit a program for use by or in connection with an instruction execution system, apparatus or device. More specific examples (a non-exhaustive list) of the computer-readable medium include: an electrical connection part (an electronic device) with one or more wires, a portable computer disk case (a magnetic device), a random access memory (RAM), a read-only memory (ROM), an erasable programmable read-only memory (EPROM or flash memory), an optical fiber device, and a portable CD-ROM. In addition, the computer-readable medium may even be paper or other suitable medium on which the program may be printed, because the program may be obtained electronically by, for example, optically scanning the paper or other medium, followed by editing, interpreting or processing in other suitable ways if necessary, and then stored in a computer memory.

It should be understood that various parts of the present invention may be implemented in hardware, software, firmware or a combination thereof. In the above embodiments, a plurality of steps or methods may be realized by software or firmware stored in a memory and executed by an appropriate instruction execution system. For example, if it is implemented by hardware, as in another embodiment, it may be implemented by any one of the following technologies known in the art or their combination: discrete logic circuits with logic gates for implementing logic functions on data signals, application specific integrated circuits with appropriate combinational logic gates, programmable gate arrays (PGAs), field programmable gate arrays (FPGAs), etc.

Those ordinary skilled in the art may understand that all or part of the steps carried by the methods of the above embodiments may be completed by instructing related hardware through programs, which may be stored in a computer-readable storage medium, and the program, when executed, includes one or a combination of the steps of the method embodiments.

In addition, each functional unit in each embodiment of the present invention may be integrated in one processing module, or each unit may exist physically alone, or two or more units may be integrated in one module. The above integrated modules may be realized in the form of hardware or software functional modules. The integrated module may also be stored in a computer-readable storage medium when it is implemented in the form of the software functional module and sold or used as an independent product.

The storage medium mentioned above may be a read-only memory, a magnetic disk or an optical disk, etc.

## Claims

1. A method for creating a digital key, comprising:
receiving (S501, S601) a terminal public key certificate sent by a target terminal, wherein the terminal public key certificate is obtained by signing a terminal public key of the target terminal by using a fleet pairing private key in a fleet pairing public-private key pair associated with a target vehicle in a fleet;
performing (S502, S602) a signature verification on the terminal public key certificate by using a fleet pairing public key in the fleet pairing public-private key pair;
sending (S503, S603) a vehicle public key certificate of the target vehicle to the target terminal in a case that the terminal public key is obtained after the signature verification is successful; and
determining (S504, S604) that a digital key corresponding to the target terminal for controlling the target vehicle is successfully created in response to that the target terminal obtains a vehicle public key of the target vehicle.

2. The method according to claim 1, wherein the fleet pairing public key is obtained by the target vehicle through the following steps:
sending (S701) a fleet vehicle registration application to a cloud, wherein the fleet vehicle registration application is configured for the cloud to register vehicles and generate a fleet pairing public key certificate for the target vehicle;
receiving and storing (S702) the fleet pairing public key certificate sent by the cloud; and
performing (S703) a signature verification on the fleet pairing public key certificate by using a cloud public key, to obtain the fleet pairing public key.

3. The method according to claim 2, wherein the fleet vehicle registration application is configured for the cloud to:
verify registration application information carried in the fleet vehicle registration application;
register the registration application information, and create the fleet pairing public-private key pair for the target vehicle, in a case that the verification is passed;
sign the fleet pairing public key in the fleet pairing public-private key pair by using a cloud private key, to obtain the fleet pairing public key certificate; and
send the fleet pairing public key certificate to the target vehicle.

4. The method according to any one of claims 1-3, wherein the vehicle public key certificate is obtained by a cloud using a cloud private key to sign a vehicle public key; and
a successful signature verification notice is sent to the target vehicle in a case that the target terminal performs a signature verification on the vehicle public key certificate by using a cloud public key, and obtains the vehicle public key after the signature verification is successful.

5. The method according to claim 4, wherein the cloud public key is obtained by the target vehicle through the following steps:
receiving a cloud public key certificate sent by the cloud, wherein the cloud public key certificate is obtained by self-signing the cloud public key by using the cloud private key;
performing a signature verification on the cloud public key certificate; and
extracting the cloud public key from a certificate body of the cloud public key certificate in a case that the signature verification is successful.

6. The method according to any one of claims 1-5, further comprising:
deleting (S901) a fleet pairing public key certificate and the fleet pairing public key locally stored in response to removing the target vehicle from the fleet; and
sending (S902) a fleet vehicle deregistration application to a cloud in response to that the deletion of the fleet pairing public key certificate and the fleet pairing public key is completed,
wherein the fleet vehicle deregistration application is configured for the cloud to delete the fleet pairing public-private key pair, the fleet pairing public key certificate and registration application information associated with the target vehicle.

7. A method for creating a digital key, comprising:
sending (S1101, S1203) a terminal public key certificate to a target vehicle in a fleet, wherein the terminal public key certificate is obtained by signing a terminal public key of a target terminal by using a fleet pairing private key in a fleet pairing public-private key pair associated with the target vehicle;
receiving (S1102, S1204) a vehicle public key certificate sent by the target vehicle, wherein the vehicle public key certificate is configured to be sent in a case that the target vehicle performs a signature verification on the terminal public key certificate by using a fleet pairing public key in the fleet pairing public-private key pair and obtains the terminal public key after the signature verification is successful; and
performing (S1103, S1205) a signature verification on the vehicle public key certificate, and obtaining a vehicle public key of the target vehicle after the signature verification is successful.

8. The method according to claim 7, wherein before sending the terminal public key certificate to the target vehicle in the fleet, the method further comprises:
sending (S1201) a digital key creation request for the target vehicle to a cloud, wherein the digital key creation request carries the terminal public key, the terminal public key is configured for the cloud to verify the digital key creation request, and in a case that the verification is passed, to sign the terminal public key by using the fleet pairing private key, to obtain the terminal public key certificate; and
receiving (S1202) the terminal public key certificate sent by the cloud in response to the digital key creation request.

9. The method according to claim 8, wherein the digital key creation request carries at least one of:
account information of the target terminal;
vehicle information of the target vehicle;
application information of the target terminal for applying for the digital key; or
business information associated with the target terminal in a business scenario to which the fleet belongs.

10. The method according to any one of claims 7-9, wherein the vehicle public key certificate is obtained by a cloud signing the vehicle public key by using a cloud private key; and
performing the signature verification on the vehicle public key certificate comprises:
performing the signature verification on the vehicle public key certificate by using a cloud public key.

11. The method according to claim 10, wherein the cloud public key is obtained by the target terminal through the following steps:
receiving a cloud public key certificate sent by the cloud, wherein the cloud public key certificate is obtained by self-signing the cloud public key by using the cloud private key;
performing a signature verification on the cloud public key certificate; and
extracting the cloud public key from a certificate body of the cloud public key certificate in a case that the signature verification is successful.

12. An electronic device (1800), comprising:
a processor (1851); and
a memory (1852) for storing instructions executable by the processor (1851),
wherein the processor (1851) is configured to:
execute the instructions to execute the steps of a method according to any one of claims 1-6, or the steps of a method according to any one of claims 7-11.

13. A non-transitory computer-readable storage medium, for storing instructions, which, when executed by a processor (1851) of an electronic device (1800), cause the processor (1851) to execute the steps of a method according to any one of claims 1-6, or to execute the steps of a method according to any one of claims 7-11.

14. A computer program product, comprising a computer program which, when executed by a processor (1851), causes the processor to execute a method according to any one of claims 1-6, or to execute a method according to any one of claims 7-11.
